Europäisches Patentamt

European Patent Office

Office européen des brevets

(19)

(11) Veröffentlichungsnummer: **0 186 042 B1**

(12) **EUROPÄISCHE PATENTSCHRIFT**

(45) Veröffentlichungstag der Patentschrift: **13.03.91**

(51) Int. Cl.5: **C01G 1/02, C01G 49/00**

(21) Anmeldenummer: **85115745.3**

(22) Anmeldetag: **11.12.85**

(54) **Verfahren und Vorrichtung zur Herstellung von keramischen Pulvern auf Basis von ein- und/oder mehrkomponentigen Metalloxiden sowie deren Gemischen.**

(30) Priorität: **17.12.84 AT 3990/84**

(43) Veröffentlichungstag der Anmeldung:
**02.07.86 Patentblatt 86/27**

(45) Bekanntmachung des Hinweises auf die
Patenterteilung:
**13.03.91 Patentblatt 91/11**

(84) Benannte Vertragsstaaten:
**BE CH DE FR GB IT LI LU NL SE**

(56) Entgegenhaltungen:
**DE-A- 2 217 951      DE-B- 1 243 660
DE-B- 1 592 301      FR-A- 2 297 813
US-A- 2 493 304      US-A- 2 693 409
US-A- 4 529 575**

(73) Patentinhaber: **Ruthner, Michael Johann,
Dipl.Ing. Dr.mont.
Aichereben 18
A-4865 Nussdorf(AT)**

(72) Erfinder: **Ruthner, Michael Johann, Dipl.Ing.
Dr.mont.
Aichereben 18
A-4865 Nussdorf(AT)**

(74) Vertreter: **Nöth, Heinz, Dipl.-Phys. et al
Patentanwälte Pfenning, Meinig & Partner
Mozartstrasse 17
W-8000 München 2(DE)**

**Beschreibung**

Die Erfindung betrifft ein Verfahren zur Herstellung von keramischen Pulvern auf der Basis von ein- und/oder mehrkomponentigen Metalloxiden sowie deren Gemischen, wie Metalloxide, Oxidgemische, bei dem ein Ausgangsmaterial in einem Ofen mit einer Ofenatmosphäre bei einer Temperatur von 500 bis 3500° K, vorzugsweise bis 2500° K, behandelt wird.

Aus der DE-B-1 592 301 ist es zur Herstellung von Metalloxidmischungen aus metallischen Verbindungen bzw. Legierungen, die sich in Pulverform gemeinsam oxidieren lassen, bekannt, die Legierung oder das Verbindungsgemisch in feinst pulverisierter und homogener Form zusammen mit der für eine vollständige Oxidation benötigten Menge Sauerstoff durch eine im wesentlichen vertikale Reaktionszone zu führen, die zumindest teilweise auf oder über der Zündtemperatur gehalten wird, und das hierbei gebildete Oxidpulver unmittelbar anschließend schnell abgekühlt wird. Das gewonnene Oxidpulver soll insbesondere zur Herstellung von Mischungen mit Ohmschem Widerstand für elektrische Widerstände verwendet werden.

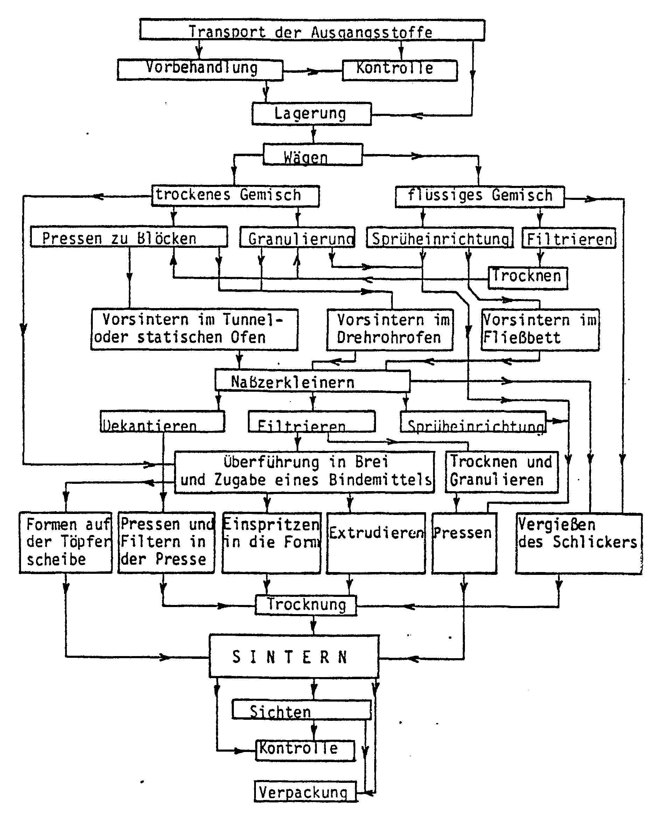

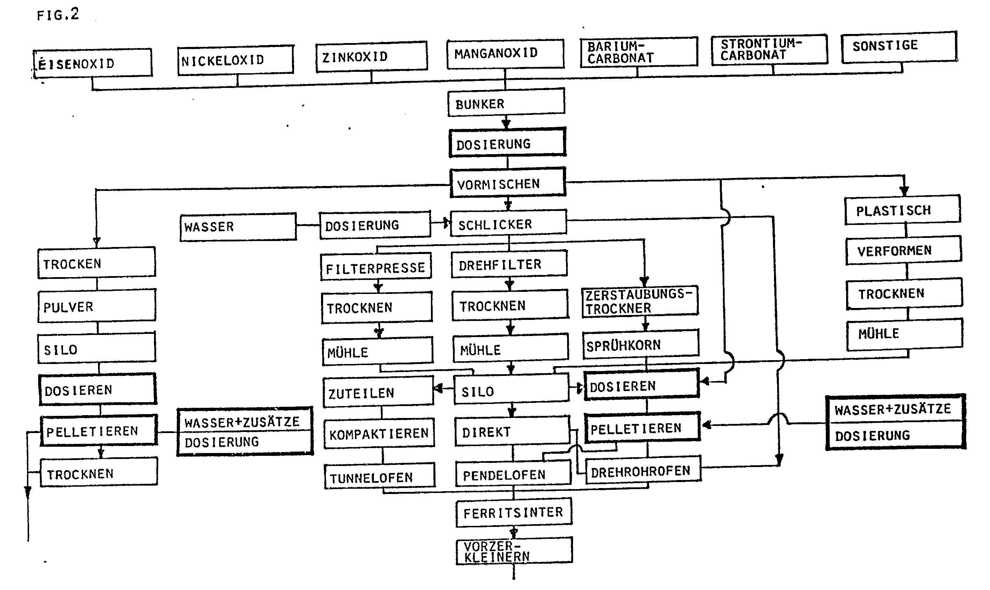

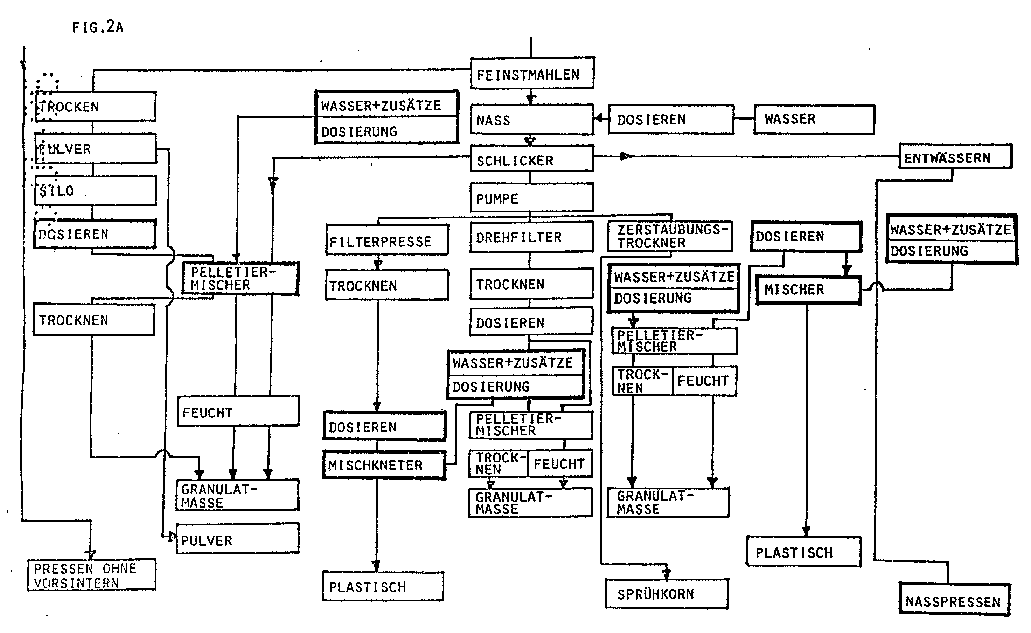

Der einschlägige Stand der Technik auf dem Gebiet der Herstellung Keramischer Pulver wird am besten durch die schematischem Zusammenstellungen illustriert, wie sie beispielsweise in den Fig. 1 und 2 der Zeichnungen dargestellt sind, und die der einschlägigen Literatur, man vergl. bezüglich Fig. 1 "Bulletin de la Societé de Ceramique", C 525, A 43, bzw. "Fa. Eirich Fachberichte, Ausgabe 21/1980". Ersichtlich handelt es sich dabei stets um vielstufige und komplizierte Verfahren.

Hinzu kommen noch an sich bekannte Verfahren zur Herstellung keramischer Pulver, welche sich durch das Einsprühen von Lösungen bzw. Suspensionen in direkt oder indirekt beheizte Reaktionsräume (z.B. Sprühröster) auszeichnen. Auch andere Verfahren sind in der Literatur vielfach beschrieben. Lediglich als Beispiele aus der Patentliteratur seien angeführt:

US-A-3 378 335, De-B-24 03 900, EP-A-0 011 265.

Die Herstellung vorgesinterter bzw. reaktionsgesinterter keramischer Pulver erfolgt in bekannter Weise durch Plattendurchstoßöfen, Kammeröfen, Drehrohröfen, Pendelöfen, sowie durch den Einsatz von Fließbettreaktoren und Sprühröstanlagen.

Der Vorsintergrad, die chemische und physikalische Beschaffenheit der nach diesen Verfahren hergestellten keramischen Pulver unterliegen dabei erheblichen, verfahrensbedingten Schwankungen in den Materialeigenschaften, welche zu Störungen bei den folgenden Verarbeitungsschritten und damit zu Qualitätseinbußen führen können.

Inbesondere ist es bei den obengenannten Verfahren bei der Herstellung keramischer Pulver aus mitunter unterschiedlichen Gründen nicht möglich dem sich bildendem keramischen Reaktionsprodukt, insbesondere den einzelnen Teilchen, welche ihrerseits Aggregate und Agglomerate aufbauen ein und dieselbe thermische und chemische Behandlung widerfahren zu lassen. Dies führt zwangsläufig zur Ausbildung von Teilchen unterschiedlicher chemischer Zusammensetzung sowie einer breit gestreuten Teilchengrößenverteilung, welche auch durch nachgeschaltete, mitunter unerwünschte, Mahlprozesse nicht in gewünschtem Maß korrigiert werden können. Sehr komplexe Mahl- und Aufbereitungsprozesse sind in diesem Zusammenhang diskutiert worden, wie beispielsweise aus den Arbeiten von T. Ochiai und K. Okutani in "Advances in Ceramics", Vol. 15, 16 (1984/85) hervorgeht.

Bei direkt beheizten Vorsinteröfen (bzw. Reaktionssinteröfen), z.B. beim Sprühröstverfahren, ist die Beschaffenheit der Ofenatmosphäre stark von der Zusammensetzung der Brenngase abhängig und kann nicht in gewünschter Weise frei gewählt werden.

Dies führt, z.B. bei der Herstellung von alpha-Ferrioxid, einem wichtigen Rohstoff zur Herstellung von Ferriten, zum Auftreten von wechselnden unerwünschten Produktanteilen von Maghemit (gamma-Ferrioxid) und Magnetit (Ferroferrioxid), wie dies gleichfalls in der Literatur bereits beschrieben wurde.

Beim Sprühröstverfahren kommt es zur Einsprühung von Tröpfchen, welche einem Durchmesser von etwa 20 μm bis 500 μm aufweisen, man vergleiche die eingangs zitierten Literaturstellen. Die verfahrensbedingte Führung der Brenn- und Reaktionsgase in Form einer Zyklonbildung führt dazu, daß die kleineren Tröpfchen, bzw. Agglomerate der Röstprodukte, einen höheren Auftrieb und dadurch eine unterschiedliche thermische Behandlung im Vergleich zu größeren Tröpfchen, bzw. größeren Agglomeraten der Röstprodukte, widerfahren. Dadurch ist es möglich, daß in ein und demselben Produkt sehr unterschiedliche Teichengrößen festgestellt werden können.

Hinzu kommt noch, daß insbesondere bei Vorsinter- und Reaktionssinterverfahren, welche verfahrensbedingt eine längere Prozeßzeit in Anspruch nehmen, bereits ein Kristall (= Teilchen) Wachstum in einem Ausmaß eintritt, das zwangsläufig zur Ansammlung von ursprünglich fein verteilten Verunreinigungen führt.

Die ungünstige Verteilung der Verunreinigungen sowei nachgeschaltene Aufmahlprozesse, welche aus wirtschaftlichen Gründen nicht ausreichem um die Verunreinigungen wieder fein zu verteilen, sind gemeinsam mit der breit gestreuten Teilchengrößenverteilung dafür verantwortlich, daß sogenannte keramische Duplexstrukturen bei der Verwendung derartiger keramischer Pulver in fertig gesinterten keramischen Formteilen entstehen, welche die qualitativen Werkstoffeigenschaften nachteilig beeinflussen.

Der vorliegenden Erfindung liegt die Aufgabe zugrunde, durch den Einsatz eines an sich neuen Vorsinter- bzw. Reaktionssinterverfahrens, die Herstellung von keramischem Pulver in Form von Aggregaten bzw. Agglomeraten mit vorgegebener Teilchengröße im Mikron und Submikron Bereich, gleichbleibender chemischer Zusammensetzung sowie einer engen Teilchengrößenverteilung zu gewährleisten, wobei unter Teilchengröße eine Definition nach DIN 53206, Blatt 1, Seite 2, Absatz 1.1., verstanden wird. Darüberhinaus soll das Produkt frei von prozeßbedingten Verunreinigungen gehalten werden.

Diese Aufgabe wird erfindungsgemäß durch die kennzeichnenden Merkmale des Anspruchs 1 gelöst.

Die keramischen Pulvermassen eignen sich für die Herstellung von Ferriten, Titanaten, Spinellen, Zirkonaten, Granaten, Silikaten, Magnesiumoxid, Aluminiumoxid, keramischen Pigmenten, Poliermittel, oxidkeramischen Trägerwerkstoffen, sowie feuerfesten Werkstoffen und werden anschließend entweder direkt eingesetzt oder in nachgeschalteten Verfahrensstufen zu Teilen gepreßt und in an sich bekannter Weise gesintert.

Zur Durchführung des Verfahres ist der Ofen als Fallrohrofen mit mindestens einem Fallrohrstrang und einer Einrichtung zum freien Einlauf des im festen Aggregatzustand befindlichen Ausgangsmaterials ausgebildet.

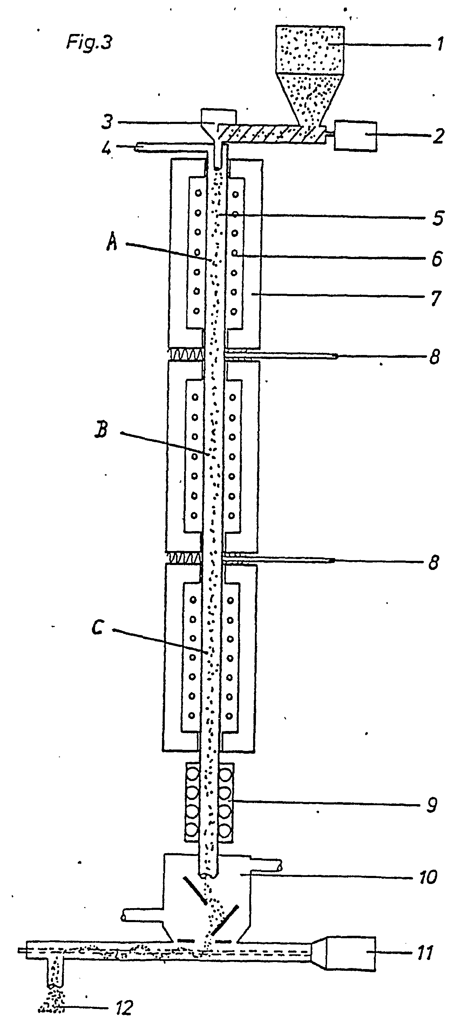

In Abhängigkeit von der gewünschten Beschaffenheit des Endprodukts, wird die Ofenatmosphäre eine inerte, z.B. Argon, $N_2$ oder eine oxydierende oder reduzierend wirkende Ofenatmosphäre mit einstellbaren Oxidations- bzw. Reduktionsbedingungen verwendet. Eine schematische Darstellung erfindungsgemäßen Verfahrens sowie der dazu gehörenden Vorrichtung in Form eines Fallrohrofens ist aus Fig. 3 ersichtlich, welche beispeilsweise in drei Temperaturzonen A, B und C unterteilt ist.

Ein Silo 1 enthält den Rohstoff mit den vorgegebenem Materialeigenschaften. Das Rohstoffgranulat wird über eine Dosierung 2 und eine Aufgabeeinrichtung 3 in den indirekt beheizten 6 und gut isolierten 7 Fallrohrstrang 5 eingebracht, wo das Granulat, z.B. im quasi freien Fall, innerhalb von wenigen Sekunden auf Reaktionstemperatur gebracht wird und entsprechend der über Rohrleitungen 8 vorgegebenen Ofenatmophäre in ein Reaktionsprodukt mit steuerbaren Materialeigenschaften übergeführt wird. Anschließende Kühlsysteme 9,10,11 kühlen die gebildeten keramischen Pulver 12, gegebenenfalls unter kontrollierten Abkühlbedingungen, z.B. Abschreckung an Luft, im Wasser, in flüssigen Gasen oder Abkühlung unter einstellbaren oxydierenden, reduzierenden oder inerten Bedingungen bis auf Raumtemperatur ab. Die gebildeten Reaktionsgase werden über den Ofenkopf 4 oder den Ofenboden (10) abgezogen. Es versteht sich, daß der Fallrohrstrang 5 auch in mehr als drei Zonen unterteilt sein kann.

Die Erfindung wird an Hand von Ausführungsbeispielen näher erläutert, wobei ein Fallrohrstrang mit vier Temperaturzonen A, B, C und D verwendet wird.

1. Ausführungsbeispiel

Aufgabenstellung:     Herstellung von Mangan-Zink-Ferritpulver mit einer Teilchengröße von 0,4 μm.

Ein Rohstoffgemisch folgender Zusammensetzung: 14,5 Gew.% MnO, 13,5 Gew.% ZnO und 72,0 Gew.% $Fe_2O_3$, wurde in einer Kugelmühle aufgemahlen und die erhaltene Suspension sprühgetrocknet. Eine Granulatgröße von 37 μm bis 88 μm wurde abgesiebt und im Silo aufgegeben. Das Granulat hatte eine Restfeuchtigkeit von 0,5 Gew.%. Die spezifische Oberfläche (BET) betrug 8,0 m²/g. Untenstehend wurden die Verfahrensbedingungen im Fallrohrofen sowie die Materialeigenschaften des gegenständlichen Pulvers festgehalten.

VERFAHRENSBEDINGINGEN IM FALLROHROFEN:

1. AUFGABEMENGE (G/MIN.) ..100.
2. AUFGABEGERÄT Dosierschnecke.
3. TEMPERATURPROFIL IN °K
   ZONE A .1100 ZONE C 1400
   ZONE B .1250 ZONE D 1400
4. VERWEILZEIT (S) .... ..2.5
5. WANDANSÄTZE .Spuren.(B).

6. SCHÜTTGEWICHT (G/L) 865...
7. OFENATMOSPHÄRE Luft.......
8. PRODUKTNACHBEHANDLUNG ....
   Luftabkühlung
9. ·ALLFÄLLIGES .............

PRODUKTDATEN:

1. SPEZ. OBERFLÄCHE (M²/G) 3..15
2. PHASEN Spinell; Ausgangsrohstoffe nicht nachweisbar .
3. TEILCHENGRÖBE (µM) 0.39
   TEILCHENVERTEILUNG 0.30-0.45
   TEILCHENFORM kugelförmig
4. AGGLOMERAT BZW. AGGREGAT-
   GRÖBE (µM) 20 µm bis 60 µm
   FESTIGKEIT gering
5. VERPREBBARKEIT gegeben..
6. SCHÜTTGEWICHT (G/L) 1540

7. VERUNREINIGUNGSGRAD (PPM)
   minus 520 ppm an Salzgehalten
8. PRODUKTMENGE-PRODUKTION
   (G/VERSUCH) .360.000.....
   (G/MIN.) 103.5
9. ·ALLFÄLLIGES

2. Ausführungsbeispiel

Aufgabenstellung: Herstellung von Nickel-Ferritpulver mit einem Teilchendurchmesser von ca. 0,45 µm.

Ein Rohstoffgemisch folgender Zusammensetzung: 63,26 Gew.% $Fe_2O_3$ und 36,73 Gew.% $Ni(OH)_2$ wurde in einer Sandmühle gemahlen und die erhaltene Suspension sprühgetrocknet. Eine Granulatgröße von 44 µm - 105 µm wurde abgesiebt und in den Silo übergeführt. Restfeuchtigkeit 0,38 Gew.%.. Die Spezifische Oberfläche des Granulats betrug 12,0 m²/g. Untenstehend wurden die Verfahrensbedingungen im Fallrohrofen sowie die Materialeigenschaften des gegenständlichen Pulvers festgehalten;

<u>VERFAHRENSBEDINGINGEN IM FALLROHROFEN:</u>

1. AUFGABEMENGE (G/MIN.) .100..

2. AUFGABEGERÄT Vibrationsdosierrinne

3. TEMPERATURPROFIL IN °K
   ZONE A .1000. ZONE C .1400.
   ZONE B .1350. ZONE D .1405.

4. VERWEILZEIT (S) ...2,6...

5. WANDANSÄTZE .keine......

6. SCHÜTTGEWICHT (G/L) 970...

7. OFENATMOSPHÄRE Luft.......

8. PRODUKTNACHBEHANDLUNG ....
   Abkühlung an Luft........

9. ALLFÄLLIGES ............

<u>PRODUKTDATEN:</u>

1. SPEZ. OBERFLÄCHE (M²/G) .2,6.

2. PHASEN Nickelferrit,........
   Spuren unbestimmter Zuordnung

3. TEILCHENGRÖBE (µM) 0,46µm...
   TEILCHENVERTEILUNG 0,4µm-0,5µm
   TEILCHENFORM kugelförmig. ...

4. AGGLOMERAT BZW. AGGREGAT-
   GRÖBE (µM) 25 bis 65 µm. ...
   FESTIGKEIT gering........

5. VERPREBBARKEIT möglich.. ....

6. SCHÜTTGEWICHT (G/L) 1640 ....

7. VERUNREINIGUNGSGRAD (PPM)
   minus 650 ppm Cl; SO,...

8. PRODUKTMENGE-PRODUKTION
   (G/VERSUCH) .270.000......
   (G/MIN.) ......93,2........

9. ALLFÄLLIGES

<u>3. Ausführungsbeispiel</u>

Aufgabenstellung:      Herstellung von MgO-Pulver mit einer Teilchengröße (REM) von 1,0 µm.

Ein Rohstoffgemisch folgender Zusammensetzung: 98,5 Gew.% MgO, 0,2 Gew.% CaO, 0,3 Gew.% SiO₂, welches als sprühgeröstetes Magnesiumoxid mit einer spezifischen Oberfläche von 12,5 m²/g und einer Agglomeratgröße von 30 µm bis 250 µm vorlag, wurde direkt mit einer Materialtemperatur von 800 °K über eine Dosierrinne in den Fallrohrofen aufgegeben.

Untenstehend wurden die Verfahrensbedingungen im Fallrohrofen sowie die Materialeigenschaften des gegenständlichen Pulvers festgehalten;

VERFAHRENSBEDINGINGEN IM FALLROHROFEN:

1. AUFGABEMENGE (G/MIN.) ..100..
2. AUFGABEGERÄT Dosierschnecke ...............
3. TEMPERATURPROFIL IN °K
   ZONE A .1850.   ZONE C 2050....
   ZONE B .2050.   ZONE D 2000....
4. VERWEILZEIT (S)....4,7....
5. WANDANSÄTZE ..keine.....
   ........................

6. SCHÜTTGEWICHT (G/L) ..380..
   .............................
7. OFENATMOSPHÄRE .Luft.......
   .............................
8. PRODUKTNACHBEHANDLUNG ....
   langsam abgekühlt an Luft
   .............................
9. ALLFÄLLIGES .gegenstrom-..
   führung.des.Ofenabgases...

PRODUKTDATEN:

1. SPEZ. OBERFLÄCHE (M²/G) .1,85.
2. PHASEN .Periklas...........
   .............................
3. TEILCHENGRÖßE (µM) .0,93....
   TEILCHENVERTEILUNG 0,8 - 1,2 µm
   TEILCHENFORM kugelförmig ...
4. AGGLOMERAT BZW. AGGREGAT-
   GRÖßE (µM) 20 bis 160 µm ...
   FESTIGKEIT gering.........
5. VERPREßBARKEIT ..gut.... ....
6. SCHÜTTGEWICHT (G/L) 1280....

7. VERUNREINIGUNGSGRAD (PPM)
   600 ppm weniger Cl' (SO₃..
8. PRODUKTMENGE-PRODUKTION
   (G/VERSUCH) 450.000.......
   (G/MIN.) ...98,9..........
9. ALLFÄLLIGES
   .............................
   .............................
   .............................
   .............................
   .............................
   .............................

4. Ausführungsbeispiel

Aufgabenstellung:     Herstellung von keramischem Trägermaterial auf Basis von umgewandelten $SiO_2$-reichen Aufbereitungsrückständen.

Ein Rohstoffgemisch folgender Zusammensetzung:

80,1 Gew.% $SiO_2$, 2,1 Gew.% $Al_2O_3$, 0,5 Gew.% $Fe_2O_3$ sowie 1,0 Gew.% $K_2O$ und 2,5 Gew.% Borax. Die Restgehalte der Anteile waren im wesentlichen Feuchtigkeit und Kristallwasser. Die Spezifische Oberfläche des Rohstoffs lag bei 218,0 m²/g. Es wurden Mikropellets mit einem Durchmesser von 500 bis 1500 µm aufgegeben. Untenstehend wurden die Verfahrensbedingungen im Fallrohrofen sowie die Materialeigenschaften des gegenständlichen Pulvers festgehalten;

VERFAHRENSBEDINGINGEN IM FALLROHROFEN:

1. AUFGABEMENGE (G/MIN.) .250..
2. AUFGABEGERÄT Dosierrinne ...........
3. TEMPERATURPROFIL IN °K
   ZONE A .1200 ZONE C .1350
   ZONE B .1350 ZONE D .1350
4. VERWEILZEIT (S) ...2,6........
5. WANDANSÄTZE ....gering..
   ......................

6. SCHÜTTGEWICHT (G/L) ..980.
   ......................
7. OFENATMOSPHÄRE Luft ...........
   ......................
8. PRODUKTNACHBEHANDLUNG ....
   Luftabkühlung...........
9. ALLFÄLLIGES Zusatz von K₂O
   und Borax................

PRODUKTDATEN:

1. SPEZ. OBERFLÄCHE (M²/G) .35,5.
2. PHASEN Silikate, SiO₂, Gläser
   ......................
3. TEILCHENGRÖßE (µM) ..0,06...
   TEILCHENVERTEILUNG .0,03-0,08 µm
   TEILCHENFORM kugelig; plattenf.
4. AGGLOMERAT BZW. AGGREGAT-
   GRÖßE (µM) 200 - 1200 µm ...
   FESTIGKEIT gut............
5. VERPREßBARKEIT möglich .....
6. SCHÜTTGEWICHT (G/L) 167,5 ....

7. VERUNREINIGUNGSGRAD (PPM)
   minus 2000 ppm Cl!........
8. PRODUKTMENGE-PRODUKTION
   (G/VERSUCH) 400.000 ............
   (G/MIN.) 235 ............
9. ALLFÄLLIGES
   ......................
   ......................
   ......................
   ......................
   ......................
   ......................

5. Ausführungsbeispiel

Aufgabenstellung:     Herstellung eines Strontiumferritpulvers mit einer mittleren Teilchengröße von 0,8 µm.

Ein Rohstoffgemisch folgender Zusammensetzung:
15,0 Gew.% $SrCO_3$ und 85,0 Gew.% $Fe_2O_3$ wurden in einer Sandmühle aufgemahlen und die erhaltene Suspension sprühgetrocknet. Eine Granulatgröße von 37µm bis 74 µm wurde mit Hilfe eines Vibrationssieb abgetrennt und im Silo aufgegeben. Restfeuchtugkeit 0,35 Gew.%. Die spezifische Oberfläche (BET) betrug 7,6 m²/g.
Untenstehend wurden die Verfahrensbedingungen im Fallrohrofen sowie die Materialeigenschaften des gegenständlichen Pulvers festgehalten;

7

VERFAHRENSBEDINGINGEN IM FALLROHROFEN:

1. AUFGABEMENGE (G/MIN.) .100..
2. AUFGABEGERÄT Dosierrinne...
3. TEMPERATURPROFIL IN °K
   ZONE A .1300 ZONE C .1600
   ZONE B .1500 ZONE D .1580
4. VERWEILZEIT (S) ..2,8...
5. WANDANSÄTZE keine.......
   ............................

6. SCHÜTTGEWICHT (G/L) .1150.
   ............................
7. OFENATMOSPHÄRE Luft.......
   ............................
8. PRODUKTNACHBEHANDLUNG ....
   Abkühlung an Luft.........
9. · ALLFÄLLIGES .............
   ............................

PRODUKTDATEN:

1. SPEZ. OBERFLÄCHE (M²/G) .1,45.
2. PHASEN Hexaferrit, Spuren...
   von anderen Phasen.........
3. TEILCHENGRÖßE (µM) .0,78....
   TEILCHENVERTEILUNG 0,7 bis 0,9 µm
   TEILCHENFORM kugelf,-plattenf.
4. AGGLOMERAT BZW. AGGREGAT-
   GRÖßE (µM) .25 - 60 µm.....
   FESTIGKEIT .vorhanden.... ...
5. VERPREßBARKEIT möglich.....
6. SCHÜTTGEWICHT (G/L) 1760....

7. VERUNREINIGUNGSGRAD (PPM)
   minus 750 ppm Cl.. SO,....
8. PRODUKTMENGE-PRODUKTION
   (G/VERSUCH) ..500.000.....
   (G/MIN.) .....95,8........
9. · ALLFÄLLIGES
   ............................
   ............................
   ............................
   ............................
   ............................
   ............................

6. Ausführungsbeispiel

Aufgabenstellung:       Herstellung von $Ce_2O_3$ mit einer durchschnittlichen Teilchengröße von 0,2 µm aus Cerchloridheptahydrat.

Cerchloridheptahydrat wurde mechanisch zerkleinert und die Klassierungen 44 µm bis 88 µm dem Silo aufgegeben. Die Restfeuchtigkeit lag bei ca. 0,5 Gew.%.

Untenstehend wurden die Verfahrensbedingungen im Fallrohrofen sowie die Materialeigenschaften des gegenständlichen Pulvers festgehalten;

VERFAHRENSBEDINGINGEN IM FALLROHROFEN:

1. AUFGABEMENGE (G/MIN.) ..100.
2. AUFGABEGERÄT Dosierrinne .............
3. TEMPERATURPROFIL IN °K
   ZONE A ..800. ZONE C 1350
   ZONE B .1250 ZONE D 1350
4. VERWEILZEIT (S) ...2,9....
5. WANDANSÄTZE ...keine....
   ...........................

6. SCHÜTTGEWICHT (G/L) ..865.
   ...........................
7. OFENATMOSPHÄRE N₂., HCl., H₂O,
   7,5 vol.% O₂., NOₓ.........
8. PRODUKTNACHBEHANDLUNG ....
   gesätt. Wasserdampf 520 °K
9. ALLFÄLLIGES Abgas wurde über
   Ofenkopf abgesaugt .......

PRODUKTDATEN:

1. SPEZ. OBERFLÄCHE (M²/G) .4,2.
2. PHASEN Ce₂O₃ (alpha).........
   ...........................
3. TEILCHENGRÖßE (µM) .0,2......
   TEILCHENVERTEILUNG 0,1.-.0,,3. µm
   TEILCHENFORM prismenförmig...
4. AGGLOMERAT BZW. AGGREGAT-
   GRÖßE (µM) 20.-.60.µm......
   FESTIGKEIT gut...........
5. VERPREßBARKEIT gegeben......
6. SCHÜTTGEWICHT (G/L)460......

7. VERUNREINIGUNGSGRAD (PPM)
   geringe Cl⁻-Gehalte: 70 ppm
8. PRODUKTMENGE-PRODUKTION
   (G/VERSUCH) 250.000.......
   (G/MIN.) ...105...........
9. ALLFÄLLIGES

7. Ausführungsbeispiel
Aufgabenstellung: Herstellung von pulverförmigem alpha-Al₂O₃ mit einer mittleren Teilchengröße von 0,5 µm.

99,1 Gew.% $Al_2O_3 \cdot 3H_2O$, welches nach dem Bayer-Verfahren hergestellt wurde, wies eine spezifische Oberfläche (BET) von 46,5 m²/g auf. Granulate mit einem Durchmesser von 45 - 105 µm wurden abgesiebt und in einen Rohstoffsilo aufgegeben. Die Feuchtigkeit des Produktes lag bei 0,4 Gew.%

Untenstehend wurden die Verfahrensbedingungen im Fallrohrofen sowie die Materialeigenschaften des gegenständlichen Pulvers festgehalten;

9

VERFAHRENSBEDINGINGEN IM FALLROHROFEN:

1. AUFGABEMENGE (G/MIN.) ...100..

2. AUFGABEGERÄT Dosierrinne...

3. TEMPERATURPROFIL IN °K
   ZONE A 800   ZONE C 2050
   ZONE B 2050   ZONE D 2050

4. VERWEILZEIT (S) ..3.5...

5. WANDANSÄTZE ...keine...

...........................

6. SCHÜTTGEWICHT (G/L) .680..

...........................

7. OFENATMOSPHÄRE Luft.+.H₂O.

...........................

8. PRODUKTNACHBEHANDLUNG ....
   .mit.Luft.abgekühlt.......

9. ALLFÄLLIGES .............

...........................

PRODUKTDATEN:

1. SPEZ. OBERFLÄCHE (M²/G) 3,35.

2. PHASEN .alpha-Al₂O₃.........

............................

3. TEILCHENGRÖBE (µM) .0,44....
   TEILCHENVERTEILUNG 0,35-0,55.
   TEILCHENFORM .kugelförmig ...

4. AGGLOMERAT BZW. AGGREGAT-
   GRÖBE (µM) .35.-.75.µm... ...
   FESTIGKEIT .gering........ ...

5. VERPRESSBARKEIT .gegeben. ....

6. SCHÜTTGEWICHT (G/L) ..1380...

7. VERUNREINIGUNGSGRAD (PPM)
   minus.250.ppm.SO₃!!........

8. PRODUKTMENGE-PRODUKTION
   (G/VERSUCH) .200.000........
   (G/MIN.) .62,5...............

9. ALLFÄLLIGES

...........................

...........................

...........................

...........................

...........................

...........................

**Ansprüche**

1. Verfahren zur Herstellung von keramischen Pulvern auf der Basis von ein- und/oder mehrkomponentigen Metalloxiden sowie deren Gemischen, wie Metalloxide, Oxidgemische, bei dem ein Ausgangsmaterial in einem Ofen mit einer Ofenatmosphäre bei einer Temperatur von 500 bis 3500° K, vorzugsweise bis 2500° K, behandelt wird, dadurch gekennzeichnet, daß das aus mindestens einer der Komponenten Metalloxid, Metallhydroxid, Metallsalz, $SiO_2$-Verbindungen bestehende Ausgangsmaterial mit einer spezifischen Oberfläche von 0,05 bis 500 m² /g (BET), vorzugsweise von 5,0 bis 50 m² /g, als Granulat mit einem mittleren Durchmesser von 10 bis 2500 µm und vorzugsweise von 25 bis 250 µm, in Form von durch Klassierung getrennten Granulatfraktionen aufgegeben wird, das Aufgabegut frei einlaufend und unter dem Einfluß der Schwerkraft quasi freifallend während 0,5 bis 15, vorzugsweise 1,5 bis 5 Sekunden lang, in der Ofenatmosphäre, die oxidierend, inert oder reduzierend ist, vorgesintert oder reaktionsgesintert wird, und dann in ein Pulver deagglomeriert wird, das bei einer maximalen Teilchengrößenabweichung (REM) von ± 0,75 µm, vorzugsweise von weniger als ± 0,25 µm, eine durchschnittliche Teilchengröße von 0,05 bis 10 µm aufweist.

2. Verfahren nach Anspruch 1, dadurch gekennzeichnet, daß das klassierte Aufgabegut vorerwärmt über eine Dosiereinrichtung in den Ofen eingebracht wird.

3. Verfahren nach Anspruch 1, dadurch gekennzeichnet, daß die quasi freifallenden klassierten Granulate und ihre Austragung aus dem Ofen durch Gleichstrom- bzw. Gegenstromführung der Reaktionsgase beschleunigt bzw. verzögert wird.

4. Verfahren nach Anspruch 1, dadurch gekennzeichnet, daß mittels Ultraschall, Sandmühlen and Strahlmühlen deagglomeriert wird.

5. Verfahren nach Anspruch 1, dadurch gekennzeichnet, daß das Reaktionssintern bzw. Vorsintern des Granulats in mindestens einem Fallrohrstrang eines Fallrohrofens durchgeführt wird.

6. Verfahren nach Anspruch 5, dadurch gekennzeichnet, daß das Temperaturprofil des Fallrohrstranges in mehrere Temperaturzonen unterteilt wird.

7. Verfahren nach Anspruch 6, dadurch gekennzeichnet, daß der Fallrohrstrang indirekt beheizt wird.

8. Verfahren nach Anspruch 7, dadurch gekennzeichnet, daß die indirekte Beheizung des Fallrohrstranges mittels Plasmabrennern erfolgt.

9. Verfahren nach Anspruch 6, dadurch gekennzeichnet, daß das Granulat nach der letzten beheizten Temperaturzone abgekühlt wird.

## Claims

1. A process for producing ceramic powders consisting of single- and/or multicomponent-metal oxides, just as mixtures thereof, like metal oxides, oxide mixtures, treating a raw material feed within a furnace at an atmosphere having a temperature from 500 to 3.500° K, prefereably up to 2.500° K, providing that a raw material comprising at least one component selected from metal oxide, metal hydroxide, metal salt, $SiO_2$-containing compositions, exhibiting a specific surface area of 0.05 to 500 $m^2/g$ (BET), preferably of 5.0 to 50 $m^2/g$, is charged in form of classified granules exhibiting an average diameter of 10 to 2500 $\mu m$, preferably 25 to 250 $\mu m$, in a freely entering manner and by action of gravity, quasi free falling, during 0.5 to 15 seconds, preferably 1,5 to 5 seconds, into the atmosphere being composed of a gas selected from oxidizing, inert or reducing, is presintered or reaction sintered and subsequently is deagglomerated into a ceramic powder, retaining a maximum primary particle size deviation (SEM) of + 0.75 $\mu m$, preferably less than 0.25 $\mu m$, exhibiting average primary particle sizes of 0.05 to 10 $\mu m$.

2. Process according to claim 1, wherein said classified granules are preheated prior to being introduced by means of a metering device into the furnace.

3. Process according to claim 1, wherein the quasi free falling classified granules and their discharge from the furnace, become accellerated or reduced by means of the cocurrent respectively contercourrent action or reaction gases.

4. Process according to claim 1, wherein produced granules become deagglomerated by means of ultrasonic devices sand mills and and jet mills.

5. Process according to claim 1, wherein reaction sintering respectively presintering of granules is accomplished within at least one tube of a gravity tube furnace.

6. Process according to claim 5, wherein the temperature profile within gravity tube is subdivided into several zones.

7. Process according to claim 6, wherein the gravity tube is indirectly heated.

8. Process according to claim 7, wherein indirect heating is accomplished by means of plasma burners.

9. Process according to claim 6, wherein granules become cooled after the last heated zone.

## Revendications

1. Procédé pour la fabrication de poudres de céramiques à partir d'oxydes métalliques à un ou plusieurs composants ainsi que leurs mélanges, tel que oxydes métalliques et mélanges d'oxydes;procédé dans lequel le produit fini, obtenu par traitement dans un four sous atmosphère à des températures com = prises entre 500 et 3500° K, de préférence jusqu'à 2500° K, est caractérisé par le fait que ce produit,: constitué d'au moins un des composants d'oxydes , hydroxydes, sels métalliques, combinaisons $SiO^2$, se présente avec une surface spécifique de 0,05 à 500 m²/g (BET) voire de 5,0 à m²/g et comme un granulé d'un diamètre moyen de 10 à 2500 $\mu$ voire même de de 25 à 250 $\mu$ sous la forme de fractions de granulés séparés par classement; le produit alimenté en continu, et tombant pratiquement librement par gravité en 0,5 à 15 sec. ou de préférence entre 1,5 et 5 sec., dans une atmosphère qui peut être neutre, oxydante ou réductrice, est ainsi préfritté ou fritté par réaction, devenant alors une poudre désagglomérée, d'une taille de particules moyenne de 0,05 à 10 $\mu$, avec une dispersion maximale de $\pm$ 0,75 $\mu$ (REM) voire même inférieure

2. Procédé selon revendication 1, caractérisé parune introduction dans le four d'un produit classé et préchauffé, et au moyen d'une installation de dosage.

3. Procédé selon revendication 1, caractérisé par l'accélération ou le ralentissement de la chute quasiment libre du granulé classé et son extractior du four grâce à l'injection des gaz de réaction en équi- ou à contre-courant.

4. Procédé selon revendication 1 caractérise par la dislocation par ulta-sons des formations de voûtes ou d'engorgement.

5. Procédé selon revendication 1, caractérisé par le fait que la réaction de frittage ou le préfrittage sont conduits au minimum en un seul flux dans le four à chute libre.

6. Procédé selon revendication 5, caractérisé par une courbe de température dans le flux séparée en plusieurs zônes de températures

7. Procédé selon revendication 6, dont le dispositif est chauffé indirectement

8. Procédé selon revendication 7, dont le dispositif est chauffé indirectement au moyen de brûleurs à plasma

9. Procédé selon revendication 6, caractérisé par un refroidissement du granulé après la dernière zône de chauffage.

Transport der Ausgangsstoffe

Vorbehandlung → Kontrolle

Lagerung

Wägen

trockenes Gemisch | flüssiges Gemisch

Pressen zu Blöcken | Granulierung | Sprüheinrichtung | Filtrieren

Trocknen

Vorsintern im Tunnel- oder statischen Ofen | Vorsintern im Drehrohrofen | Vorsintern im Fließbett

Naßzerkleinern

Dekantieren | Filtrieren | Sprüheinrichtung

Überführung in Brei und Zugabe eines Bindemittels | Trocknen und Granulieren

Formen auf der Töpferscheibe | Pressen und Filtern in der Presse | Einspritzen in die Form | Extrudieren | Pressen | Vergießen des Schlickers

Trocknung

S I N T E R N

Sichten

Kontrolle

Verpackung

FIG.2

FIG.2A

FEINSTMAHLEN

WASSER+ZUSÄTZE DOSIERUNG — NASS ← DOSIEREN — WASSER

TROCKEN

PULVER

SILO — SCHLICKER → ENTWÄSSERN

DOSIEREN — PUMPE

FILTERPRESSE — DREHFILTER — ZERSTÄUBUNGS-TROCKNER — DOSIEREN — WASSER+ZUSÄTZE DOSIERUNG

PELLETIER-MISCHER

TROCKNEN — TROCKNEN — WASSER+ZUSÄTZE DOSIERUNG — MISCHER

DOSIEREN — PELLETIER-MISCHER

FEUCHT — WASSER+ZUSÄTZE DOSIERUNG — TROCK-NEN | FEUCHT

DOSIEREN — PELLETIER-MISCHER

GRANULAT-MASSE — MISCHKNETER — TROCK-NEN | FEUCHT — GRANULAT-MASSE

PULVER — GRANULAT-MASSE

PRESSEN OHNE VORSINTERN — PLASTISCH — SPRÜHKORN — PLASTISCH — NASSPRESSEN

EP 0 186 042 B1

Fig.3